# EUROPÄISCHE PATENTSCHRIFT

(11) **EP 1 389 495 B1**
(45) Veröffentlichungstag und Bekanntmachung des Hinweises auf die Patenterteilung: **27.04.2005**
(21) Anmeldenummer: 03017597.0
(22) Anmeldetag: 08.08.2003
(51) Int. Cl.: B08B 3/02, B05B 1/30

(54) **Schliessvorrichtung für die Flüssigkeitsabgabeleitung eines Hochdruckreinigungsgerätes**
Closing device for the liquid delivery line of a high-pressure cleaning apparatus
Dispositif de fermature destiné au conduit de distribution de liquide d'un appareil de nettoyage sous haute pression

(30) Priorität: 12.08.2002 DE 10237428
(43) Veröffentlichungstag der Anmeldung: 18.02.2004
(73) Patentinhaber: Alfred Kärcher GmbH & Co. KG, 71364 Winnenden (DE)
(72) Erfinder: Kassulat, Bernd, 71394 Kernen (DE); Seitter, Ralph, 71522 Backnang (DE)
(74) Vertreter: HOEGER, STELLRECHT & PARTNER Patentanwälte

(56) Entgegenhaltungen:
- EP-A- 0 408 865
- DE-A- 3 109 845
- DE-U- 29 722 006

## Beschreibung

Die Erfindung betrifft eine Schließvorrichtung für die Flüssigkeitsabgabeleitung eines Hochdruckreinigungsgerätes mit einem in der Flüssigkeitsabgabeleitung angeordneten Schließkörper, der mit einer Schließkraft gegen einen Ventilsitz gedrückt wird und dadurch die Flüssigkeitsabgabeleitung verschließt und der durch ein mechanisches, abgedichtet aus der Flüssigkeitsabgabeleitung austretendes und mittels eines Handhebels verschiebbares Betätigungselement von dem Ventilsitz abhebbar ist, wenn der Handhebel in Richtung einer Öffnungsstellung bewegt wird.

Derartige Schließvorrichtungen sind beispielsweise aus der DE 3109845 A1, der DE 81 18 510 U1 oder der DE 35 27 922 C2 bekannt. Insbesondere beim Arbeiten mit sehr hohen Drücken ist es bei derartigen Schließvorrichtungen schwer, die Schließventile zu öffnen, da die Schließkörper durch den hohen Betriebsdruck mit hoher Kraft gegen ihre Ventilsitze gedrückt werden. Daher erfordert das Öffnen bereits sehr hohe Kräfte, und auch während des Betriebes sind hohe Öffnungskräfte notwendig, die insbesondere bei längerem Öffnen ermüdend sein können.

Es ist Aufgabe der Erfindung, eine gattungsgemäße Schließvorrichtung derart zu verbessern, daß auch beim Arbeiten mit sehr hohen Drücken die Öffnungskräfte reduziert werden können, während gleichzeitig auch eine Reduktion der nach dem Öffnen der Schließvorrichtung notwendigen Haltekräfte erreicht werden kann.

Diese Aufgabe wird bei einer Schließvorrichtung der eingangs beschriebenen Art erfindungsgemäß dadurch gelöst, daß in der Flüssigkeitsabgabeleitung stromaufwärts des Ventilsitzes ein verschiebbar gelagerter Kolben abgedichtet aus der Flüssigkeitsabgabeleitung austritt und beim Ausschieben aus der Flüssigkeitsabgabeleitung derart mit dem Handhebel in Wirkverbindung tritt, daß die Öffnungsbewegung des Handhebels unterstützt wird.

Der in der Flüssigkeitsabgabeleitung gelagerte Kolben wird somit bereits vor der Öffnung der Schließvorrichtung von der Flüssigkeit in der Flüssigkeitsabgabeleitung beaufschlagt, die unter hohem Druck steht. Diese unter erhöhtem Druck stehende Flüssigkeit verschiebt damit den in der Flüssigkeitsabgabeleitung gelagerten Kolben nach außen, so daß dieser Kolben aus der Flüssigkeitsabgabeleitung herausbewegt wird. Diese Bewegung wird übertragen auf den Handhebel, und zwar derart, daß dieser in Richtung auf seine Öffnungsstellung bewegt wird. Dadurch unterstützt der Kolben unter der Wirkung des Flüssigkeitsdrukkes in der Flüssigkeitsabgabeleitung die Öffnungsbewegung des Handhebels, die Haltekraft wird damit reduziert. Diese Reduzierung tritt schon vor dem Öffnen des Schließventils auf und erleichtert das Öffnen des Schließventils, sie wird aber auch nach dem Öffnen beibehalten, da üblicherweise die Flüssigkeit aus der Flüssigkeitsabgabeleitung über unterschiedliche Düsen austritt, die als Drossel wirken und daher für die Aufrechterhaltung eines erhöhten Druckes in der Flüssigkeitsabgabeleitung sorgen.

Es ist vorteilhaft, wenn der Kolben gemäß einer bevorzugten Ausführungsform der Erfindung beim Ausschieben aus der Flüssigkeitsabgabeleitung bei einem schwenkbar gelagerten Handhebel im Abstand von dessen Schwenkachse an diesem zur Anlage kommt und diesen beim weiteren Ausschieben verschwenkt.

Der Kolben kann beispielsweise als zylindrischer Stift ausgebildet sein, grundsätzlich sind aber auch alle anderen Formen möglich.

Bei einer bevorzugten Ausführungsform ist vorgesehen, daß die Verschieberichtung des Kolbens im wesentlichen quer zur Verschieberichtung des Betätigungselementes verläuft.

Günstig ist es, wenn die Flüssigkeitsabgabeleitung abgewinkelt ist und wenn sowohl der Kolben als auch das Betätigungselement in der Verlängerung je eines Abschnittes der an die Abwinkelung anschließenden Abschnitte der Flüssigkeitsabgabeleitung aus dieser austreten.

Die Größe der von dem Kolben auf den Handhebel ausgeübten Kraft hängt vom Querschnitt des Kolbens ab, je größer der Querschnitt ist, desto größer werden diese Kräfte, da der Kolben im Inneren der Flüssigkeitsabgabeleitung von der unter erhöhtem Druck stehende Flüssigkeit beaufschlagt wird, auf der Außenseite dagegen nur durch den atmosphärischen Umgebungsdruck. Durch die Querschnittswahl des Kolbens läßt sich also die Größe der Haltekraftreduzierung beeinflussen, die Größe wird vom Fachmann so gewählt werden, daß bei den üblichen Betriebsbedingungen, bei denen unterschiedliche Drücke in der Flüssigkeitsabgabeleitung herrschen können, in allen Fällen eine Haltekraftreduzierung eintritt, die aber nur so groß sein darf, daß beim Loslassen des Handhebels der Schließkörper wieder auf dem Ventilsitz aufsitzt und die Flüssigkeitsabgabeleitung verschließt.

Die nachfolgende Beschreibung bevorzugter Ausführungsformen der Erfindung dient im Zusammenhang mit der Zeichnung der näheren Erläuterung. Es zeigen:
- Figur 1:: eine schematische Seitenansicht einer Handspritzpistole eines Hochdruckreinigungsgerätes ohne die daran anschließenden Leitungsteile;

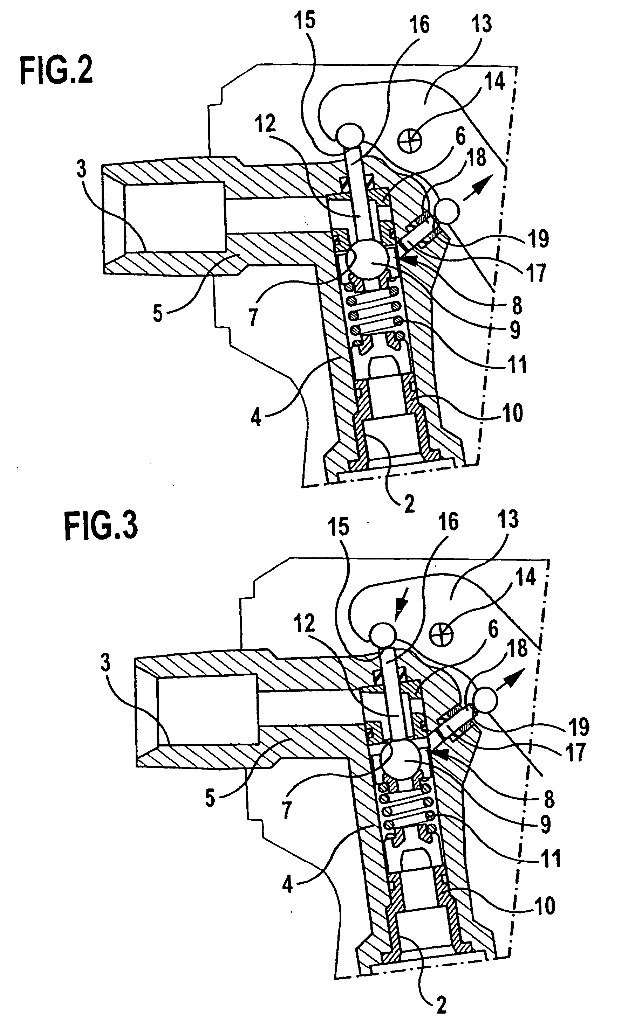

- Figur 2:: eine vergrößerte Detailansicht der Schließvorrichtung der Handspritzpistole der Figur 1 mit in Längsrichtung geschnittener Flüssigkeitsabgabeleitung vor Beginn des Öffnungsvorganges der Schließvorrichtung und
- Figur 3:: eine Ansicht ähnlich Figur 2 bei geöffneter Schließvorrichtung.

In der Zeichnung ist lediglich der Griffteil einer Handspritzpistole 1 dargestellt, eine derartige Handspritzpistole 1 wird normalerweise in eine Flüssigkeitsabgabeleitung eines Hochdruckreinigungsgerätes eingeschaltet, dabei wird an einem Einlaß 2 ein in der Zeichnung nicht dargestellter Hochdruckschlauch angeschlossen und an einem Auslaß 3 ein normalerweise nicht flexibles Strahlrohr, an dessen Ende eine Auslaßdüse angeordnet wird, dieses Strahlrohr ist in der Zeichnung ebenfalls nicht dargestellt. Die Handspritzpistole 1 weist einen an den Einlaß 2 anschließenden geradlinigen Rohrabschnitt 4 und einen sich an diesen unter Ausbildung eines fast rechten Winkels anschließenden weiteren geradlinigen Rohrabschnitt 5 auf, der zum Auslaß 3 führt. Im Übergangsbereich zwischen den Rohrabschnitten 4 und 5 ist eine stufenförmige Verengung 6 angeordnet, die einen Ventilsitz 7 für ein Schließventil 8 ausbildet. Dieses Schließventil 8 umfaßt neben dem Ventilsitz 7 einen kugelförmigen Schließkörper 9, der von einer an einem Einsatz 10 gehaltenen Schraubenfeder 11 gegen den Ventilsitz 7 gedrückt wird und dadurch das Schließventil 8 verschließt.

In der Verlängerung der Mittelachse des Rohrabschnittes 4 tritt durch die Seitenwand des Rohrabschnittes 5 abgedichtet ein stiftförmiges Betätigungselement 12 aus der Flüssigkeitsabgabeleitung nach außen aus, dies ist in Längsrichtung verschieblich in der Seitenwand der Flüssigkeitsabgabeleitung gelagert und ragt durch die Verengung 6 hindurch, in diesem Bereich liegt das Betätigungselement 12 an dem kugelförmigen Schließkörper 9 an.

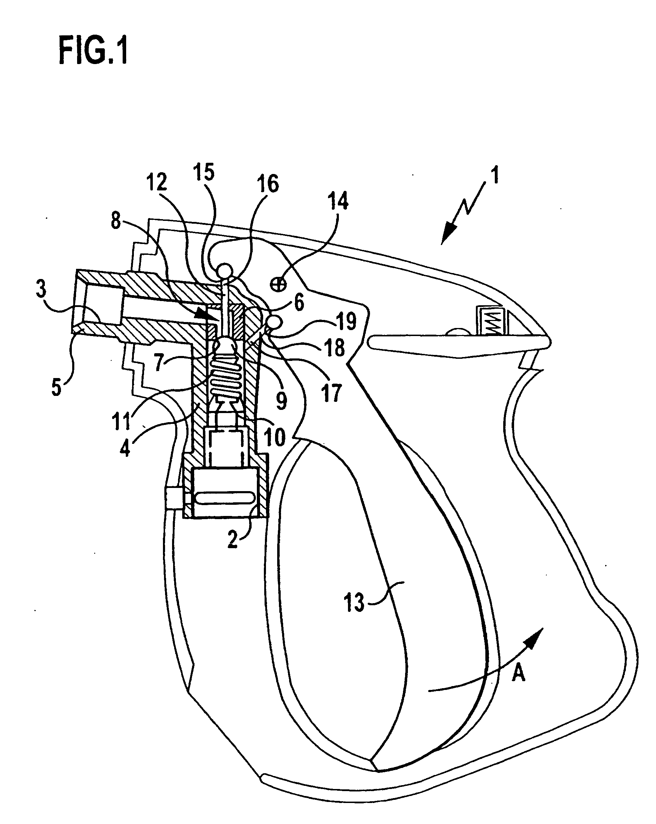

In der Handspritzpistole 1 ist außerhalb der beiden Rohrabschnitte 4, 5 ein Handhebel 13 um eine an der Handspritzpistole 1 angeordnete Schwenkachse 14 verschwenkbar gelagert, der mit einer Anlagefläche 15 an dem freien, aus dem Rohrabschnitt 4 herausragenden Ende 16 des Betätigungselementes 12 anliegt. Die Anordnung von Anlagefläche 15 und Schwenkachse 14 ist dabei so gewählt, daß bei einer Verschwenkung des Handhebels 13 in Richtung des Pfeiles A in Figur 1 die Anlagefläche 15 das Betätigungselement 12 in die Flüssigkeitsabgabeleitung hineinschiebt und dadurch den kugelförmigen Schließkörper 9 gegen die Wirkung der Schraubenfeder 11 von dem Ventilsitz 7 abhebt, dadurch wird also das Schließventil 8 geöffnet.

Unmittelbar stromaufwärts des Schließventils 8 tritt ein stiftförmiger Kolben 17 durch die Wand des Rohrabschnittes 4 abgedichtet aus der Flüssigkeitsabgabeleitung in die Umgebung aus, dieser Kolben 17 ist im Bereich der Austrittsstelle längsverschieblich in der Wand des Rohrabschnittes 4 gelagert. Das freie, außerhalb des Rohrabschnittes 4 angeordnete Ende 18 des Kolbens 17 legt sich beim Ausschieben des Kolbens 17 an eine Anlagefläche 19 des Handhebels 13 an, und zwar derart, daß der Handhebel 13 beim Ausschieben des Kolbens 17 in Richtung auf seine Öffnungsstellung verschoben wird. Die Verschieberichtung des Kolbens 17 ist bei dem in der Zeichnung dargestellten Ausführungsbeispiel gegenüber der Mittelachse des Rohrabschnittes 5 geneigt, so daß der Kolben 17 unter dem Einfluß des Druckes in der Flüssigkeitsabgabeleitung schräg nach oben gegen die Anlagefläche 19 des Handhebels 13 gedrückt wird.

Im Betrieb der dargestellten Handspritzpistole 1 ist normalerweise das Schließventil 8 unter der Wirkung der Schraubenfeder 11 verschlossen. Die am Einlaß 2 anstehende Flüssigkeit weist einen hohen Druck auf und verschiebt dadurch den kugelförmigen Schließkörper 9 in Richtung auf den Ventilsitz 7, d. h. in Schließstellung. Die Schließkraft wird jedoch dadurch reduziert, daß der Kolben 17 gegen die Anlagefläche 19 des Handhebels 13 gedrückt wird und dadurch versucht, diesen in seine Öffnungsstellung zu verschwenken, in der auf das Betätigungselement 12 eine Druckkraft ausgeübt wird, die ihrerseits versucht, den Schließkörper 9 vom Ventilsitz 7 abzuheben. Damit wird ein Teil der Schließkraft kompensiert, mit der der Schließkörper 9 gegen den Ventilsitz 7 gedrückt wird.

Zum Öffnen der Handspritzpistole 1 muß der Handhebel 13 in Richtung des Pfeiles A in Figur 1 verschwenkt werden, dabei drückt der Handhebel 13 über die Anlagefläche 15 das Betätigungselement 12 in die Flüssigkeitsabgabeleitung hinein und hebt den kugelförmigen Schließkörper 9 gegen die Wirkung der Schraubenfeder 11 von seinem Ventilsitz 7 ab, die anstehende Flüssigkeit kann somit durch das Schließventil 8 hindurch zum Auslaß 3 gelangen. In dem stromabwärts des Schließventils 8 angeordneten Bereich der Flüssigkeitsabgabeleitung bildet sich dabei gegenüber der Umgebung ein erhöhter Druck aus, da die sich an den Auslaß 3 anschließenden Leitungsteile, insbesondere die Auslaßdüsen, also Drossel wirken. Durch diesen erhöhten Druck stromabwärts des Schließventils 8 wird auch der Kolben 17 beaufschlagt, allerdings mit einer geringeren Kraft als vor dem Öffnen des Schließventils 8.

Durch geeignete Querschnittswahl des Kolbens 17 können diese Schließkräfte so weit kompensiert werden, daß die Bedienungsperson zum Offenhalten des Schließventils nur noch geringe Haltekräfte benötigt, daß aber andererseits sichergestellt ist, daß beim Loslassen des Handhebels 13 der Schließkörper 9 wieder sicher auf den Ventilsitz 7 gedrückt wird.

## Patentansprüche

1. Schließvorrichtung für die Flüssigkeitsabgabeleitung (4, 5) eines Hochdruckreinigungsgerätes mit einem in der Flüssigkeitsabgabeleitung (4, 5) angeordneten Schließkörper (9), der mit einer Schließkraft gegen einen Ventilsitz (7) gedrückt wird und **dadurch** die Flüssigkeitsabgabeleitung (4, 5) verschließt und der durch ein mechanisches, abgedichtet aus der Flüssigkeitsabgabeleitung (4, 5) austretendes und mittels eines Handhebels (13) verschiebbares Betätigungselement (12) von dem Ventilsitz (7) abhebbar ist, wenn der Handhebel (13) in Richtung einer Öffnungsstellung bewegt wird, **dadurch gekennzeichnet, daß** in der Flüssigkeitsabgabeleitung (4, 5) stromaufwärts des Ventilsitzes (7) ein verschiebbar gelagerter Kolben (17) abgedichtet aus der Flüssigkeitsabgabeleitung (4, 5) austritt und beim Ausschieben aus der Flüssigkeitsabgabeleitung (4, 5) derart mit dem Handhebel (13) in Wirkverbindung tritt, daß die Öffnungsbewegung des Handhebels (13) unterstützt wird.

2. Schließvorrichtung nach Anspruch 1, **dadurch gekennzeichnet, daß** der Kolben (17) beim Ausschieben aus der Flüssigkeitsabgabeleitung (4, 5) bei einem schwenkbar gelagerten Handhebel (13) im Abstand von dessen Schwenkachse (14) an diesen zur Anlage kommt und diesen beim weiteren Ausschieben verschwenkt.

3. Schließvorrichtung nach Anspruch 1 oder 2, **dadurch gekennzeichnet, daß** der Kolben (17) als zylindrischer Stift ausgebildet ist.

4. Schließvorrichtung nach einem der voranstehenden Ansprüche, **dadurch gekennzeichnet, daß** die Verschieberichtung des Kolbens (17) im wesentlichen quer zur Verschieberichtung des Betätigungselementes (12) verläuft.

## Claims

1. A closure device for the fluid-delivery conduit (4, 5) of high-pressure cleaning apparatus, having a closure body (9) positioned within the fluid-delivery conduit (4, 5), which closure body (9) is pressed with a closing force against a valve seat (7), thereby closing the fluid-delivery conduit (4, 5), and, when a hand lever (13) is moved in the direction of an open position, is raisable from the valve seat (7) by a mechanical actuating member (12) which emerges from the fluid-delivery conduit (4, 5) in a sealed manner and is displaceable with the use of the hand lever (13), **characterised in that** a displaceably mounted piston (17) within the fluid-delivery conduit (4, 5) upstream of the valve seat (7) emerges from the fluid-delivery conduit (4, 5) in a sealed manner and, while being forced out of the fluid-delivery conduit (4, 5), comes into actuating contact with the hand lever (13) in such a way that the opening movement of the hand lever (13) is supported.

2. A closure device according to Claim 1, **characterised in that**, while being forced out of the fluid-delivery conduit (4, 5) in association with a swivellably mounted hand lever (13), the piston (17)comes to rest against the said hand lever at a distance from the swivel axis (14) thereof and, while being forced out further, swivels the said hand lever.

3. A closure device according to Claim 1 or 2, **characterised in that** the piston (17) is in the form of a cylindrical pin.

4. A closure device according to any one of the preceding claims, **characterised in that** the displacement direction of the piston (17) extends substantially crosswise to the displacement direction of the actuating member (12).

## Revendications

1. Dispositif de fermeture destiné au conduit de distribution de liquide (4, 5) d'un appareil de nettoyage sous haute pression comportant une pièce de fermeture (9) disposée dans le conduit distribution de liquide (4, 5), qui est pressé contre un siège de soupape (7) par une force de fermeture et ferme de ce fait le conduit de distribution de liquide (4, 5) et qui peut être enlevé du siège de soupape (7) par un élément d'actionnement (12) mécanique, sortant de manière étanche de la conduite de distribution de liquide (4, 5) et pouvant être coulissé au moyen d'un levier à main (13), lorsque le levier à main (13) est actionné dans la direction d'une position d'ouverture, **caractérisé en ce qu'**un piston (17) logé dans la conduite de distribution de liquide (4, 5) en amont du siège de soupape (7) de manière à pouvoir coulisser sort de manière étanche de la conduite de distribution de liquide (4, 5) et entre en relation de coopération avec le levier à main lorsqu'il est poussé hors de la conduite de distribution de liquide (4, 5) de sorte que le mouvement d'ouverture du levier à main (13) soit soutenu.

2. Dispositif de fermeture selon la revendication 1, **caractérisé en ce que** le piston (17), lorsqu'il est poussé hors de la conduite de distribution de liquide (4, 5) avec un levier à main (13) logé de manière à pivoter, vient en appui à distance de l'axe de pivotement (14) de ce levier et fait pivoter celui-ci lors d'une autre poussée.

3. Dispositif de fermeture selon la revendication 1 ou 2, **caractérisé en ce que** le piston (17) est réalisé sous forme de tige cylindrique.

4. Dispositif de fermeture selon l'une quelconque des revendications précédentes, **caractérisé en ce que** la direction de poussée du piston (17) s'étend essentiellement transversalement à la direction de poussée de l'élément d'actionnement (12).
